# EUROPEAN PATENT SPECIFICATION

(11) **EP 3 794 904 B1**
(45) Date of publication and mention of the grant of the patent: **24.04.2024**
(21) Application number: 19722152.6
(22) Date of filing: 10.05.2019
(51) Int. Cl.: H05B 1/02, B05C 11/10

(54) **HEATABLE MATERIAL STORAGE TANK**
BEHEIZBARER MATERIALAUFBEWAHRUNGSTANK
RÉSERVOIR DE STOCKAGE DE MATÉRIAU CHAUFFABLE

(30) Priority: 14.05.2018 EP 18305588
(43) Date of publication of application: 24.03.2021
(73) Proprietor: Covestro Deutschland AG, 51373 Leverkusen (DE)
(72) Inventor: JEANTIN, Philippe, 26300 Alixan (FR); THOMASSON, Herve, 38200 Seyssuel (FR)
(74) Representative: Levpat
(86) International application number: PCT/EP2019/062087
(87) International publication number: WO 2019/175444

(56) References cited:
- CN-U- 203 600 500
- CN-U- 206 254 398
- CN-U- 206 653 549
- CN-U- 207 044 530
- US-A- 6 033 726

## Description

### TECHNICAL FIELD OF THE INVENTION

The invention relates to heating devices based on electric heating and forced air circulation and configured to heat a storage tank filled with a material, which needs to be in a liquid form in order to be used, for example, in a low pressure dispensing machine for processing polyurethane or other thermoset polymers.

### BACKGROUND OF THE INVENTION

Usually, the low pressure or high pressure dispensing machine, also called meter-mix or casting machine, comprises at least two component circuits and each component circuit comprises a storage tank containing one component to be heated to obtain a liquid form with a determined viscosity. The dispensing machine comprises a precision gear pump, a hose going to the mixing head and generally back from it.

CN 206 254 398 U (ANQING SUOLONG NEW MAT CO LTD) 16 June 2017 (2017-06-16) describes an arrangement comprising a storage tank filled with a material, and a heating device configured to heat the storage tank.

Generally, the heating device for heating storage tank of this kind of machines, comprises a main chamber in which the storage tank is at least partially integrated, and as well as the metering elements connected to the storage tank. The main chamber of the heating device comprises heating electrical resistances configured to heat the air enclosed in the main chamber and a blower, which is configured to allow the heated air to circulate into the main chamber, in order to heat the storage tank and metering elements.

This kind of arrangement is advantageous because it is simple to implement, the technology used to heat the storage tank is not expensive compared to other heating technologies such as double-walled device with heating fluid (water, oil, glycol) and all elements of the arrangement (storage tank and metering elements) are heated with the same device. However, the heat transfer of the airflow is generally poor, and several hours are needed to heat the material contained in the storage tank in order to be at a targeted temperature and viscosity. Moreover, at elevated temperatures above 80° Celsius, the poor conductivity and heat transfer capacity generate a high gradient and it is difficult to bring the material temperature inside the storage tank at the targeted set point.

### SUMMARY OF THE INVENTION

Based on the above, the aim of the invention is to provide an improved heating device, which is simple to conceive and to operate, the heating time of a storage tank being reduced significantly compared to traditional heating device, by improving heat exchange near the storage tank.

For this purpose, one object of the invention is an arrangement comprising a storage tank filled with a material, a heating device configured to heat the storage tank, said heating device comprising:
- a casing defining an internal volume, said internal volume having :
   - an upper part, an intermediate part and a lower part, according to a longitudinal axis of the casing,
   - a main chamber, said storage tank being arranged at least partially in the main chamber,
- at least one heating element arranged at least partially in the internal volume and configured to heat a gaseous fluid contained in the internal volume,
- a blower configured to create a flow by sucking gaseous fluid from at least the upper part and to deliver sucked the gaseous fluid in the main chamber;

wherein a suction duct extends in the internal volume apart from the main chamber and communicates with said main chamber, the blower being arranged in said suction duct,
whereby the arrangement further comprises a guiding sleeve element arranged in the main chamber at a distance from the storage tank, forming a peripheral space around the storage tank, the guiding sleeve element having a cylindrical shape creating a ring section on more than half of the storage tank height and being configured to guide the gaseous fluid delivered in the main chamber to the peripheral space such that the gaseous fluid will have the highest possible speed compatible with the fan acceptable pressure drop.

Thanks to the arrangement according to the invention, the heated gaseous fluid is guided throughout the internal volume of the casing in order to improve the heat transfer with the storage tank. Indeed, the guiding sleeve element is shaped to receive the storage tank, and the heated flow is guided inside said guiding sleeve element in a peripheral space formed between storage tank exterior wall and the guiding sleeve element's internal surface. This space allows the heated gaseous fluid to be at the nearest possible to the storage tank exterior wall with an increased speed in order to increase heat transfer and heating speed. Thanks to the invention, the heating time of the storage tank is dramatically reduced by 40 to 60 % compared to the traditional technology with a similar installed power, and is allowing a considerably improved heat exchange. Advantageously, the gaseous fluid is air.

According to a feature of the invention, the casing comprises a double-walled structure, in order to be thermally insulated. According to a feature of the invention, the casing comprises a door to allow access to the storage tank and the metering elements, such as a pump, ducts for conveying the material contained into the storage tank, valves, filter, sensors, etc... According to a feature of the invention, the arrangement may comprise a single accessible casing.

According to a feature of the invention, the casing comprises at a sidewall, an upper wall and a lower wall delimiting the internal volume.

According to a feature of the invention, the casing can have a cylindrical shape or polygonal shape or any shape fitting the storage tank and components to be heated.

According to a feature of the invention, the guiding sleeve element being shaped in order to have the fastest speed and the higher contact surface creating a pressure drop compatible with the blower to keep an optimal flow. For example, the guiding sleeve element can have a cylindrical shape creating a ring section on more than half of the storage tank height or a polygonal shape.

According to another feature of the invention, the metering elements comprise a pump is configured to allow the circulation of the material from the storage tank to a dispensing element, the pump being arranged in the main chamber of the heating device.

According to a feature of the invention, metering elements, such as a pump, ducts for conveying the liquid material contained into the storage tank, valves, filter, sensors, etc..., can be advantageously arranged in the main chamber of the heating device.

Thanks to this arrangement, the pump and ducts conveying the material are also heated by the heated flow delivered in the main chamber by the blower, in order to maintain the liquid aspect of the material even if it is out of the storage tank.

According to a feature of the invention, the heating device comprises an upper cavity arranged above the guiding sleeve element and extending along a transverse axis of the casing. Preferentially, the upper cavity is extending in the upper part of the internal volume of the casing, along the upper wall of the casing. The said upper cavity allows the circulation of the flow towards the suction duct.

According to a feature of the invention, the upper cavity is in fluidic communication with the guiding sleeve element. According to a feature of the invention, the upper cavity is in fluidic communication with the suction duct.

According to a feature of the invention, the blower is positioned in the lower part of the internal volume of the casing, in the suction duct.

According to a feature of the invention, the guiding sleeve element comprises an internal surface arranged all around the external wall of the storage tank.

According to a feature of the invention, the guiding sleeve element comprises a first extremity being in communication with the main chamber and a second extremity, opposite to the first extremity, leading to the upper cavity.

According to a feature of the invention, the suction duct comprises a first segment extending from the upper part of the internal volume to the intermediate part of the internal volume.

According to a feature of the invention, the suction duct comprises one or several segments of duct, which are shaped according to the elements housed therein.

According to a feature of the invention, the suction duct comprises a second segment extending from the intermediate part of the internal volume to the lower part of the internal volume. Advantageously, the first segment of the suction duct has a cross-section reduced compared to the cross-section of the second segment. The difference between the two cross-sections allows increasing debit flow upstream the blower in order to increase the heating process of the gaseous fluid.

According to a feature of the invention, the heating element is arranged upstream from the blower and preferentially in the suction duct. Preferentially, the at least one heating element is arranged in the suction duct in the intermediate part or in the upper part of the internal volume, in order to heat gaseous fluid upstream from the main chamber. This arrangement allows heating a small volume of gaseous fluid at an increased debit flow, which increase the speed of the heating process to reach a targeted temperature value. Advantageously, the gaseous fluid to be heated is from the upper cavity of the heating device.

According to a feature of the invention, the heating element is an electrical resistance, which is simple, standard and less expensive than other technologies.

According to a feature of the invention, the heating device comprises several heating elements.

According to a feature of the invention, the heating device comprises a control unit configured to control the at least one heating element and/or the blower.

According to a feature of the invention, the heating device comprises a temperature sensor configured to measure the temperature of the gaseous fluid inside the internal volume.

According to a feature of the invention, the control unit cooperates with the temperature sensor to keep the gaseous fluid temperature at a determined set point. Thus, the temperature sensor measures temperature inside the internal volume and sends the measurements to the control unit which controls the heating element (s) and/or the blower in order to reach the determined temperature set point.

According to a feature of the invention, when the temperature of the gaseous fluid is at a targeted set point, the control unit shuts the heating elements. When the temperature of the gaseous fluid is under the targeted value, the control unit controls the heating elements in order to increase the temperature of the gaseous fluid.

According to a feature of the invention, the flow speed is determined by the control unit in order to be adapted to the heating elements to optimize heat transfer. For example, when targeted temperature is reached, the flow speed could be lower (half fan peed for example) in order to save energy by reduced thermal losses and motor consumption.

The invention has also for object a dispensing machine for processing polymers from at least two circuits-component, comprising at least a first circuit-component equipped with an arrangement according to the invention.

### BRIEF DESCRIPTION OF THE DRAWINGS

The invention will be better-understood thanks to the detailed specification hereinafter, which describes several embodiments of the invention as examples and based on the following figures.
FIG. 1 is a cross-sectional view of the arrangement according to the invention.
FIG.2 is the same view as FIG 1 with the detailed airflow circulation according to the invention.
FIG.3 is a detailed view of FIG 1 illustrating heat transfer between airflow and storage tank according to the invention.

### DETAILED DESCRIPTION

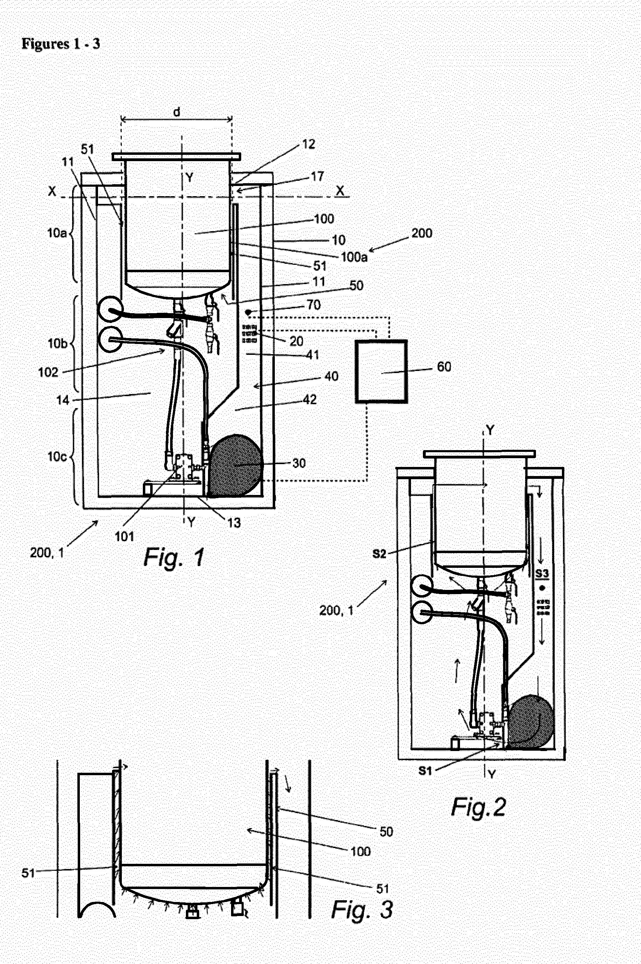

The arrangement 200 according to the invention, comprises a heating device 1 configured to heat at least one storage tank 100 as illustrated in FIGs 1 and 2. The heating device 1 comprises a casing 10 having sidewalls 11, an upper wall 12 and a lower wall 13 delimiting an internal volume. Obviously, the casing 10 illustrated has a polygonal shape but can be in a cylindrical shape or any other shape without being out of the scope of the invention. As illustrated in FIGs 1 and 2, the casing 10 comprises a double-walled structure, i.e. each sidewall 11, the upper wall 12 and the lower 13 are doubled in order to have a thermal insulation of the casing 10.

The heating device 1 further comprises at least one heating element 20, preferentially several heating elements 20, arranged at least partially in the internal volume of the casing 10 and configured to heat an airflow. In the shown embodiment, the heating elements 20 are electrical resistances but the invention is not limited to this embodiment.

The heating device 1 further comprises a blower fan 30 configured to create an airflow by sucking air from at least the upper part 10a and to deliver sucked air in the main chamber 14.

The internal volume can be divided in three parts namely upper part 10a, intermediate part 10b and lower part 10c according to a longitudinal axis Y-Y of the casing 10. Said parts 10a, 10b, 10c are illustrated schematically in FIG 1.

A shown in FIGs.1 and 2, the heating device 1 comprises an air suction duct 40 extending from the upper part 10a to the lower part 10c, as illustrated in FIGs 1 and 2. Preferentially, the heating elements 20 are arranged in the air suction duct 40 in the intermediate part 10b, upstream from the blower fan. Moreover, the blower fan 30 is also positioned in said air suction duct 40 in the lower part 10c, in order to suck air from the upper part 10a to the lower part 10c and to deliver the sucked air into the main chamber 14.

The air suction duct 40 comprises a first segment 41 extending from the upper part 10a to the intermediate part 10b and a second segment 42 extending from the intermediate part 10b to the lower part 10c, the first segment 41 having a cross-section reduced compared to the cross-section of the second segment 42, as shown in FIG. 1, for example. Obviously, the air suction duct 40 could have another shape without being out of the scope of the invention.

According to the present embodiment of the arrangement of the invention, said arrangement further comprises a guiding sleeve element 50 arranged in the main chamber 14 at a distance from the storage tank 100, forming a peripheral air space 51 around the storage tank 100, the guiding sleeve element 50 being configured to guide the air delivered in the main chamber 14 to the peripheral air space 51 at nearest possible, taking into account acceptable pressure drop to the external wall of the storage tank 100 as shown in FIGs.1, 2 and 3.

According to an embodiment of the invention, the heating device 1 may include an upper cavity 17 arranged above the guiding sleeve element 50 and extending along a transverse axis X-X of the casing 10, preferentially in the upper part 10a 10, along the upper wall 12 of the casing 10, as shown in FIG.1. Advantageously, the upper cavity 17 is in fluidic communication with the guiding sleeve element 50 and the air suction duct 40, as shown in FIG.1.

As shown in FIG.1, the heating device 1 comprises a control unit 60 configured to control the at least one heating element 20 and the blower fan 30. Moreover, the heating device 1 comprises at least one temperature sensor 70 configured to measure the temperature of the air inside the casing 10. The control unit 60 cooperates with the temperature sensor 70 to keep the air temperature at a determined set point. Thus, the temperature sensor 70 measures temperature inside the casing 10 and in particular, in the air suction duct 40 and sends the measurements to the control unit 60 which controls the heating element 20 and/or the blower fan 30 in order to reach the determined temperature set point at a determined speed.

According to the invention, the arrangement 200 illustrated in FIGs. 1 and 2 is integrated in a dispensing machine (not shown) for processing polymers from at least two circuits-component.

A shown in FIG.2, the circulation of the heated air inside the internal volume of the casing 10 is a closed loop. The air from the upper cavity 17 is sucked into the air suction duct 40 by the blower fan 30 and is heated by the heating elements 20, all the way down the lower part 10c. Then, the blower fan 30 sends the heated sucked air into the main chamber 14. The heated airflow is guided and forced to move up in the internal volume by the guiding sleeve element 50 towards the upper part 17. The heated airflow goes through the guiding sleeve element 50, to heat, by heat transfer, the storage tank 100 arranged in the said guiding sleeve element 50 as shown in particular in FIG.3. The airflow is guided through the guiding sleeve element 50 into the upper cavity 17 to be sucked again into the air suction duct 40.

According to an embodiment of the invention, metering elements 101, 102, such as a pump 101, ducts 102 for conveying the liquid material contained into the storage tank 100, valves, filter, sensors, etc..., can be advantageously arranged in the main chamber 14 of the heating device 1, in order to be also heated by the heated airflow.

According to a preferred embodiment of the invention, with a fan and a heating power similar to those used in the prior art and parameters as described in Experimental part [49], to reach a temperature of 80°c with a two hundred liters storage tank 100, unexpectedly, a dramatic improvement has been measured as the time to reach the targeted temperature has been divided by two with a product real temperature closer to the set point, demonstrating the efficiency of this new heating device 1 by forced-air circulation.

### EXPERIMENTAL PART

In FIG.2, in three sections of the casing 10, referenced S1, S2 and S3, the cross-section surface (in mm²) and the air speed (in m/s) were measured, with a blower fan power around 500W, a blower fan output 1000 m³/h and a pressure drop of 500 Pa. These measurements are presented in the following table.

| | S1 | S2 | S3 |
|---|---|---|---|
| Cross-section surface (mm²) | 10 000 | 17 000 | 35 000 |
| Airflow speed (m/s) | 27 | 16 | 7 |

In other examples (not shown), the parameters can vary: the air fan power can be between 200 and 2000 W for a blower fan output between 500 to 2000 m³/h and a pressure drop between 200 and 2000 Pa. For this kind of ranges the measurements can be:

| | S1 | S2 | S3 |
|---|---|---|---|
| Cross-section surface (mm²) | 3000 to 25 000 | 10 000 to 30 000 | 20 000 to 45 000 |
| Airflow speed (m/s) | 10 to 50 | 10 to 30 | 5 to 20 |

In other examples (not shown), the parameters can vary: the air fan power can be between 200 and 750 W for a blower fan output between 500 to 1500 m³/h and a pressure drop between 300 and 1000 Pa. For this kind of ranges the measurements can be:

| | S1 | S2 | S3 |
|---|---|---|---|
| Cross-section surface (mm²) | 5000 to 20 000 | 12 000 to 25 000 | 25 000 to 40 000 |
| Airflow speed (m/s) | 15 to 40 | 10 to 20 | 5 to 10 |

In the example illustrated in FIGs. 1 to 3, the gaseous fluid is air, but the invention is not limited to this example. Moreover, the blower is in the example a blower fan but it can be all apparatus configured to blow air or gaseous fluid.

## Claims

1. Arrangement (200) comprising a storage tank (100) filled with a material, a heating device (1) configured to heat the storage tank (100), said heating device (1) comprising:
- a casing (10) defining an internal volume, said internal volume having :
- an upper part (10a), an intermediate part (10b) and a lower part (10c), according to a longitudinal axis (X-X) of the casing (10),
- a main chamber (14), said storage tank (100) being arranged at least partially in the main chamber (14),
- at least one heating element (20) arranged at least partially in the internal volume and configured to heat a gaseous fluid contained in the internal volume,
- a blower (30) configured to create an flow by sucking gaseous fluid from at least the upper part (10a) and to deliver sucked gaseous fluid in the main chamber (14);
wherein a suction duct (40) extends in the internal volume apart from the main chamber (14) and communicates with said main chamber (14), the blower (30) being arranged in said suction duct (40),
**characterized in that** the arrangement (200) further comprises a guiding sleeve element (50) arranged in the main chamber (14) at a distance from the storage tank (100), forming a peripheral space (51) around the storage tank (100), the guiding sleeve element (50) having a cylindrical shape creating a ring section on more than half of the storage tank (100) height and being configured to guide the gaseous fluid delivered in the main chamber (14) to the peripheral space (51) such that the gaseous fluid will have the highest possible speed compatible with the fan acceptable pressure drop.

2. Arrangement according to claim 1, comprising a single accessible casing.

3. Arrangement according to claim 1, wherein the heating device (1) comprises an upper cavity (17) arranged above the guiding sleeve element (50) and extending along a transverse axis (X-X) of the casing (10), in the upper part (17), along the upper wall (12).

4. Arrangement according to any of the preceding claims, wherein the guiding sleeve element (50) comprises an internal surface arranged all around the external wall of the storage tank (100).

5. Arrangement according to any of the preceding claims, wherein the suction duct (40) comprises a first segment (41) extending from the upper part (10a) to the intermediate part (10b) and a second segment (42) extending from the intermediate part (10b) to the lower part (10c), the first segment (41) having a cross-section reduced compared to the cross-section of the second segment (42).

6. Arrangement according to any of the preceding claims, wherein the blower(30) is positioned in the lower part (10c) of the internal volume of the casing (10), in the suction duct (40).

7. Arrangement according to any of the preceding claims, wherein the heating element (20) is arranged upstream from the blower (30) and preferentially in the suction duct (40).

8. Arrangement according to any of the preceding claims, comprising a control unit (60) configured to control the at least one heating element (20) and/or the blower (30).

9. Arrangement according to any of the preceding claims, comprising a temperature sensor (70) configured to measure the temperature of the gaseous fluid inside the casing (10).

10. Arrangement according to claims 6 and 7, wherein the control unit (60) cooperates with the temperature sensor (70) to keep the gaseous fluid temperature at a determined set point.

11. Arrangement according to any of the preceding claims, wherein metering elements (101, 102) can be advantageously arranged in the main chamber (14) of the heating device (1).

12. Arrangement according to claim 11, wherein the metering element comprises a pump (101) configured to allow the circulation of the material from the storage tank (100) to a dispensing element, the pump being arranged in the main chamber (14) of the heating device (1).

13. Dispensing machine for processing polymers from at least two circuits-component, comprising at least a first circuit-component equipped with an arrangement (200) according to any of the preceding claims.

## Patentansprüche

1. Anordnung (200), umfassend einen Lagertank (100), gefüllt mit einem Material, eine Heizvorrichtung (1), ausgelegt zum Heizen des Lagertanks (100), wobei die Heizvorrichtung (1) Folgendes umfasst:
- ein Gehäuse (10), das ein internes Volumen definiert, wobei das interne Volumen Folgendes aufweist:
- einen oberen Teil (10a), einen Zwischenteil (10b) und einen unteren Teil (10c), entsprechend einer Längsachse (X-X) des Gehäuses (10),
- eine Hauptkammer (14), wobei der Lagertank (100) zumindest teilweise in der Hauptkammer (14) angeordnet ist,
- zumindest ein Heizelement (20), zumindest teilweise in dem internen Volumen angeordnet und ausgelegt zum Erhitzen eines in dem internen Volumen enthaltenen gasförmigen Fluids,
- ein Gebläse (30), ausgelegt zum Erzeugen eines Stroms durch Ansaugen von gasförmigem Fluid von zumindest dem oberen Teil (10a) und zum Zuführen des angesaugten gasförmigen Fluids in der Hauptkammer (14);
wobei sich ein Saugkanal (40) in dem internen Volumen entfernt von der Hauptkammer (14) erstreckt und mit der Hauptkammer (14) kommuniziert, wobei das Gebläse (30) in dem Saugkanal (40) angeordnet ist,
**dadurch gekennzeichnet, dass** die Anordnung (200) ferner ein Führungshülsenelement (50) umfasst, das in der Hauptkammer (14) bei einem Abstand vom Lagertank (100) angeordnet ist, einen peripheren Raum (51) um den Lagertank (100) bildend, wobei das Führungshülsenelement (50) eine zylindrische Form aufweist, einen Ringabschnitt auf mehr als der Hälfte der Höhe des Lagertanks (100) erzeugend und dazu ausgelegt, das in die Hauptkammer (14) zugeführte gasförmige Fluid in den peripheren Raum (51) zu führen, sodass das gasförmige Fluid die höchstmögliche Geschwindigkeit aufweist, die mit einem akzeptablen Druckabfall am Lüfter kompatibel ist.

2. Anordnung nach Anspruch 1, umfassend ein einzelnes zugängliches Gehäuse.

3. Anordnung nach Anspruch 1, wobei die Heizvorrichtung (1) einen oberen Hohlraum (17) umfasst, angeordnet über dem Führungshülsenelement (50) und sich entlang einer quer verlaufenden Achse (X-X) des Gehäuses (10), im oberen Teil (17), entlang der oberen Wand (12) erstreckend.

4. Anordnung nach einem der vorhergehenden Ansprüche, wobei das Führungshülsenelement (50) eine interne Oberfläche umfasst, die rund um die Außenwand des Lagertanks (100) angeordnet ist.

5. Anordnung nach einem der vorhergehenden Ansprüche, wobei der Luftsaugkanal (40) ein erstes Segment (41), das sich vom oberen Teil (10a) zum Zwischenteil (10b) erstreckt, und ein zweites Segment (42), das sich vom Zwischenteil (10b) zum unteren Teil (10c) erstreckt, umfasst, wobei das erste Segment (41) einen verringerten Querschnitt im Vergleich zum Querschnitt des zweiten Segments (42) aufweist.

6. Anordnung nach einem der vorhergehenden Ansprüche, wobei das Gebläse (30) im unteren Teil (10c) des internen Volumens des Gehäuses (10) im Saugkanal (40) positioniert ist.

7. Anordnung nach einem der vorhergehenden Ansprüche, wobei das Heizelement (20) stromaufwärts vom Gebläse (30) und vorzugsweise im Saugkanal (40) angeordnet ist.

8. Anordnung nach einem der vorhergehenden Ansprüche, umfassend eine Steuereinheit (60), ausgelegt zum Steuern des zumindest einen Heizelements (20) und/oder des Gebläses (30).

9. Anordnung nach einem der vorhergehenden Ansprüche, umfassend einen Temperatursensor (70), ausgelegt zum Messen der Temperatur des gasförmigen Fluids im Inneren des Gehäuses (10).

10. Anordnung nach Ansprüchen 6 und 7, wobei die Steuereinheit (60) mit dem Temperatursensor (70) kooperiert, um die Temperatur des gasförmigen Fluids bei einem bestimmten Einstellpunkt zu halten.

11. Anordnung nach einem der vorhergehenden Ansprüche, wobei Dosierelemente (101, 102) vorteilhafterweise in der Hauptkammer (14) der Heizvorrichtung (1) angeordnet sein können.

12. Anordnung nach Anspruch 11, wobei das Dosierelement eine Pumpe (101) umfasst, die dazu ausgelegt ist, die Zirkulation des Materials vom Lagertank (100) zu einem Ausgabeelement zu ermöglichen, wobei die Pumpe in der Hauptkammer (14) der Heizvorrichtung (1) angeordnet ist.

13. Ausgabemaschine zur Verarbeitung von Polymeren von mindestens zwei Kreiskomponenten, umfassend zumindest eine erste Kreiskomponente, ausgestattet mit einer Anordnung (200) nach einem der vorhergehenden Ansprüche.

## Revendications

1. Agencement (200) comprenant un réservoir de stockage (100) rempli d'un matériau, un dispositif chauffant (1) configuré pour chauffer le réservoir de stockage (100), ledit dispositif chauffant (1) comprenant :
- un carter (10) définissant un volume interne, ledit volume interne présentant :
- une partie supérieure (10a), une partie intermédiaire (10b) et une partie inférieure (10c), selon un axe longitudinal (X-X) du carter (10),
- une chambre principale (14), ledit réservoir de stockage (100) étant agencé au moins partiellement dans la chambre principale (14),
- au moins un élément chauffant (20) agencé au moins partiellement dans le volume interne et configuré pour chauffer un fluide gazeux contenu dans le volume interne,
- une soufflante (30) configurée pour créer un flux en aspirant un fluide gazeux depuis au moins la partie supérieure (10a) et pour délivrer le fluide gazeux aspiré dans la chambre principale (14) ;
dans lequel un conduit d'aspiration (40) s'étend dans le volume interne à l'écart de la chambre principale (14) et communique avec ladite chambre principale (14), la soufflante (30) étant agencée dans ledit conduit d'aspiration (40),
**caractérisé en ce que** l'agencement (200) comprend en outre un élément de manchon de guidage (50) agencé dans la chambre principale (14) à une certaine distance du réservoir de stockage (100), formant un espace périphérique (51) autour du réservoir de stockage (100), l'élément de manchon de guidage (50) ayant une forme cylindrique créant une section annulaire sur plus de la moitié de la hauteur du réservoir de stockage (100) et étant configuré pour guider le fluide gazeux délivré dans la chambre principale (14) vers l'espace périphérique (51) de telle sorte que le fluide gazeux ait la vitesse la plus élevée possible compatible avec la chute de pression acceptable pour le ventilateur.

2. Agencement selon la revendication 1, comprenant un boîtier accessible unique.

3. Agencement selon la revendication 1, dans lequel le dispositif chauffant (1) comprend une cavité supérieure (17) agencée au-dessus de l'élément de manchon de guidage (50) et s'étendant le long d'un axe transversal (X-X) du carter (10), dans la partie supérieure (17), le long de la paroi supérieure (12).

4. Agencement selon l'une quelconque des revendications précédentes, dans lequel l'élément de manchon de guidage (50) comprend une surface interne agencée tout autour de la paroi externe du réservoir de stockage (100).

5. Agencement selon l'une quelconque des revendications précédentes, dans lequel le conduit d'aspiration (40) comprend un premier segment (41) s'étendant de la partie supérieure (10a) à la partie intermédiaire (10b) et un second segment (42) s'étendant de la partie intermédiaire (10b) à la partie inférieure (10c), le premier segment (41) présentant une section transversale réduite par rapport à la section transversale du second segment (42).

6. Agencement selon l'une quelconque des revendications précédentes, dans lequel la soufflante (30) est positionnée dans la partie inférieure (10c) du volume interne du carter (10), dans le conduit d'aspiration (40).

7. Agencement selon l'une quelconque des revendications précédentes, dans lequel l'élément chauffant (20) est agencé en amont de la soufflante (30) et préférentiellement dans le conduit d'aspiration (40).

8. Agencement selon l'une quelconque des revendications précédentes, comprenant une unité de commande (60) configurée pour commander l'au moins un élément chauffant (20) et/ou la soufflante (30).

9. Agencement selon l'une quelconque des revendications précédentes, comprenant un capteur de température (70) configuré pour mesurer la température du fluide gazeux à l'intérieur du carter (10).

10. Agencement selon les revendications 6 et 7, dans lequel l'unité de commande (60) coopère avec le capteur de température (70) pour maintenir la température du fluide gazeux à un point de consigne déterminé.

11. Agencement selon l'une quelconque des revendications précédentes, dans lequel des éléments de mesure (101, 102) peuvent être avantageusement agencés dans la chambre principale (14) du dispositif chauffant (1) .

12. Agencement selon la revendication 11, dans lequel l'élément de mesure comprend une pompe (101) configurée pour permettre la circulation du matériau depuis le réservoir de stockage (100) vers un élément de distribution, la pompe étant agencée dans la chambre principale (14) du dispositif chauffant (1).

13. Machine de distribution pour le traitement de polymères à partir d'au moins deux composants de circuit, comprenant au moins un premier composant de circuit équipé d'un agencement (200) selon l'une quelconque des revendications précédentes.
